# EUROPEAN PATENT APPLICATION

(11) **EP 2 537 904 A1**
(43) Date of publication of application: **26.12.2012**
(21) Application number: 12004417.7
(22) Date of filing: 12.06.2012
(51) Int. Cl.: C09J 7/02, B32B 7/12, B32B 27/32

(54) **Pressure-sensitive adhesive sheet**

(30) Priority: 17.06.2011 JP 2011135081
(71) Applicant: Nitto Denko Corporation, Ibaraki-shi, Osaka 567-8680 (JP)
(72) Inventor: Kido, Akifumi, Ibaraki-shi Osaka 567-8680 (JP); Uchida, Shou, Ibaraki-shi Osaka 567-8680 (JP); Sawazaki, Ryohei, Ibaraki-shi Osaka 567-8680 (JP); Morimoto, Masakazu, Ibaraki-shi Osaka 567-8680 (JP); Hayashi, Keiji, Ibaraki-shi Osaka 567-8680 (JP)
(74) Representative: Müller-Boré & Partner Patentanwälte

(57) **Abstract**

Provided is a pressure-sensitive adhesive sheet having good unwinding property from a roll body or the like and excellent antistatic property, and suitable for a surface protective film or the like. A pressure-sensitive adhesive sheet of the present invention is a pressure-sensitive adhesive sheet including a back surface layer (A), a backing layer (B), and a pressure-sensitive adhesive layer (C), the back surface layer (A) and the pressure-sensitive adhesive layer (C) being outermost layers. The back surface layer (A) has a peel strength of 0.1 to 3.5 N/20 mm, and the back surface layer (A) has a surface resistance value of less than 1×10¹⁴ Ω/□.

In preferred embodiments the pressure-sensitive adhesive layer (C) contains at least one kind selected from a polyolefin-based resin and a styrene-based resin and the back surface layer (A) contains a block copolymer of a block of a polyolefin and a block of a hydrophilic polymer like a polyether.

## Description

The present invention relates to a pressure-sensitive adhesive sheet, and more specifically, toapressure-sensitive adhesive sheet including a back surface layer, a backing layer, and a pressure-sensitive adhesive layer, the back surface layer and the pressure-sensitive adhesive layer being outermost layers, the pressure-sensitive adhesive sheet having good unwinding property from a roll body or the like and excellent antistatic property, and being suitable for a surface protective film or the like.

A pressure-sensitive adhesive sheet to be used in a surface protective film or the like is mainly formed of a plastic material. Accordingly, the sheet has high electrical insulating property, and static electricity is generated upon its friction or release. When such pressure-sensitive adhesive sheet is used as a surface protective film for an optical member such as a polarizing plate, static electricity is generated upon its release. When the optical member in which the static electricity thus generated remains is incorporated into a liquid crystal panel and then a voltage is applied to liquid crystal, the following problem arises. The alignment of a liquid crystal molecule is lost and hence a defect occurs in the liquid crystal panel. In addition, the generation of the static electricity causes a problem in that the static electricity attracts dust or scrap.

In view of the foregoing, it has been contemplated to conduct various antistatic treatments on the pressure-sensitive adhesive sheet.

The following method has been reported (see Japanese Patent Application Laid-open No. Hei 9-165460). A low-molecular weight surfactant is added to the pressure-sensitive adhesive of the pressure-sensitive adhesive sheet, and then the surfactant is transferred from the inside of the pressure-sensitive adhesive onto an adherend to perform an antistatic treatment. In such method, however, the added low-molecular weight surfactant is apt to bleed toward the surface of the pressure-sensitive adhesive, and the bleeding raises concern about the contamination of the adherend. Therefore, the application of the pressure-sensitive adhesive, to which the low-molecular weight surfactant has been added, to a surface protective film for an optical member causes, inparticular, a problem in that the optical characteristics of the optical member are impaired.

A method involving using a conductive filler as an antistatic agent has been reported (see Japanese Patent Application Laid-open No. 2007-9135). However, the conductive filler involves the followingproblem. It is not preferred to apply the conductive filler to a pressure-sensitive adhesive sheet to be used as a surface protective film for an optical member because the use of the filler impairs the transparency of the sheet.

A polymer-type antistatic agent that is a block polymer formed of a block of a polyolefin and a block of a hydrophilic polymer has been recently proposed as an antistatic agent.

A pressure-sensitive adhesive sheet obtained by the following has been reported as a pressure-sensitive adhesive sheet using the polymer-type antistatic agent (see Japanese Patent Application Laid-open No. 2008-174727). A laminate of an antistatic layer containing the polymer-type antistatic agent and a backing layer is prepared by two-layer co-extrusion, and then a pressure-sensitive adhesive layer is formed by applying an acrylic pressure-sensitive adhesive to the backing layer side of the laminate. However, the sheet involves a problem in that its production cost is high because the pressure-sensitive adhesive layer must be formed by the application. In addition, the sheet involves a problem in that the antistatic layer has poor adhesion to backing.

A pressure-sensitive adhesive sheet obtained as described below has been reported as a pressure-sensitive adhesive sheet using the polymer-type antistatic agent (see Japanese Patent Application Laid-open No. 2010-59218). A backing layer containing the polymer-type antistatic agent, an intermediate layer, and a styrene-ethylene-butylene-styrene block copolymer-based pressure-sensitive adhesive layer are subjected to three-layer co-extrusion. However, the sheet involves a problem in that the backing layer has poor adhesion to backing.

The present invention has been made to solve the conventional problems, and an object of the present invention is to provide a pressure-sensitive adhesive sheet having so good surface adhesion to backing that a tape can be easily picked up, having excellent antistatic property, and suitable for a surface protective film or the like.

The pressure-sensitive adhesive sheet of the present invention is a pressure-sensitive adhesive sheet, including:
a back surface layer (A);
a backing layer (B); and
a pressure-sensitive adhesive layer (C),
the back surface layer (A) and the pressure-sensitive adhesive layer (C) being outermost layers,
in which:
the back surface layer (A) has a peel strength of 0.1 to 3.5 N/20 mm; and
the back surface layer (A) has a surface resistance value of less than 1×10¹⁴ Ω/□.

In a preferred embodiment, the pressure-sensitive adhesive layer (C) has an initial adhesion with respect to an acrylic plate at a measurement temperature of 23°C, a peel rate of 10 m/min, and a peel angle of 180° of 0.8 to 7 N/20 mm.

In a preferred embodiment, the pressure-sensitive adhesive layer (C) contains at least one kind selected from a polyolefin-based resin and a styrene-based resin.

In a preferred embodiment, the back surface layer (A) contains a block polymer formed of a block of a polyolefin and a block of a hydrophilic polymer.

In a preferred embodiment, a content of the block polymer in the back surface layer (A) is 2 to 50 wt%.

In a preferred embodiment, the back surface layer (A) contains a releasing agent.

In a preferred embodiment, a content of the releasing agent in the back surface layer (A) is 0.1 to 20 wt%.

In a preferred embodiment, the pressure-sensitive adhesive sheet of the present invention is obtained by subj ecting a formation material composition containing a formation material (a) for the back surface layer (A), a formation material (b) for the backing layer (B), and a formation material (c) for the pressure-sensitive adhesive layer (C) to co-extrusion molding to integrate the layers.

In a preferred embodiment, the pressure-sensitive adhesive sheet of the present invention includes a surface protective film.

In a preferred embodiment, the pressure-sensitive adhesive sheet of the present invention includes a surface protective film for an optical member.

According to the present invention, there can be provided a pressure-sensitive adhesive sheet having so good surface adhesion to backing that a tape can be easily picked up, having excellent antistatic property, and suitable for a surface protective film or the like.

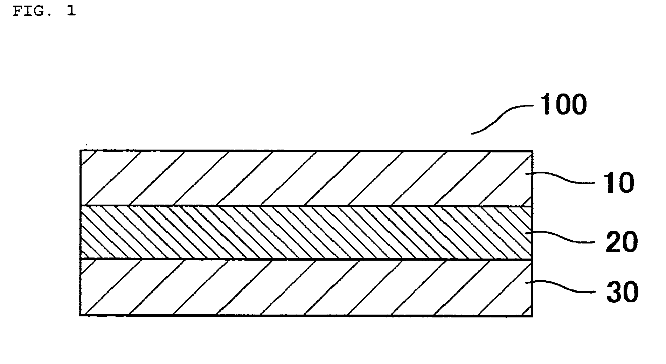

FIG. 1 is a schematic sectional view of a pressure-sensitive adhesive sheet according to a preferred embodiment of the present invention.

### ««A. Pressure-sensitive adhesive sheet»»

A pressure-sensitive adhesive sheet of the present invention is a pressure-sensitive adhesive sheet including a back surface layer (A), a backing layer (B), and a pressure-sensitive adhesive layer (C), the back surface layer (A) and the pressure-sensitive adhesive layer (C) being outermost layers. The pressure-sensitive adhesive sheet of the present invention may be a laminate of three layers formed only of the back surface layer (A), the backing layer (B), and the pressure-sensitive adhesive layer (C), or may be a laminate of four or more layers formed of the back surface layer (A), the backing layer (B), the pressure-sensitive adhesive layer (C), and at least one other appropriate layer.

The back surface layer (A) may be only one layer, or may be a laminate of two or more layers. The backing layer (B) may be only one layer, or may be a laminate of two or more layers. The pressure-sensitive adhesive layer (C) may be only one layer, or may be a laminate of two or more layers.

FIG. 1 is a schematic sectional view of a pressure-sensitive adhesive sheet according to a preferred embodiment of the present invention. In FIG. 1, a pressure-sensitive adhesive sheet 100 includes a back surface layer (A) 10, a backing layer (B) 20, and a pressure-sensitive adhesive layer (C) 30.

The thickness of the pressure-sensitive adhesive sheet of the present invention can be set to any appropriate thickness depending on applications. The thickness of the pressure-sensitive adhesive sheet of the present invention is preferably 5 µm to 200 µm, more preferably 10 µm to 100 µm, still more preferably 20 µm to 60 µm.

The pressure-sensitive adhesive sheet of the present invention is preferably formed in an integral fashion by co-extrusion molding. That is, the pressure-sensitive adhesive sheet of the present invention is preferably obtained by subjecting a formation material composition containing a formation material (a) for the back surface layer (A), a formation material (b) for the backing layer (B), and a formation material (c) for the pressure-sensitive adhesive layer (C) to co-extrusion molding to integrate the layers.

The pressure-sensitive adhesive sheet of the present invention can be used in any appropriate application. The pressure-sensitive adhesive sheet of the present invention has so good surface adhesion to backing that a tape can be easily picked up, and also has an excellent antistatic property. Therefore, a preferred application thereof is, for example, a surface protective film, and a more preferred application thereof is a surface protective film for an optical member.

The back surface layer (A) of the pressure-sensitive adhesive sheet of the present invention has a peel strength of 0.1 to 3.5 N/20 mm, preferably 0.5 to 3.5 N/20 mm, more preferably 1.0 to 3.5 N/20 mm, still more preferably 1.2 to 3.0 N/20 mm, particularly preferably 1.5 to 2.5 N/20 mm. As described above, the pressure-sensitive adhesive sheet of the present invention is extremely excellent in surface adhesion to backing. Accordingly, a tape can be easily picked up. Details about a method of measuring the peel strength are described later.

The back surface layer (A) of the pressure-sensitive adhesive sheet of the present invention has a surface resistance value of less than 1×10¹⁴ Ω/□, preferably 1×10¹³ Ω/□ or less, more preferably 1×10¹² Ω/□ or less, still more preferably 1×10¹¹ Ω/□ or less. As described above, the pressure-sensitive adhesive sheet of the present invention is extremely excellent in antistatic property. Accordingly, static electricity is hardly generated upon its friction or release, and hence the attraction of dust or scrap can be effectively suppressed. Details about a method of measuring the surface resistance value are described later.

The pressure-sensitive adhesive layer (C) of the pressure-sensitive adhesive sheet of the present invention has an initial adhesion with respect to an acrylic plate under the conditions of a measurement temperature of 23°C, a peel rate of 10 m/min, and a peel angle of 180° of preferably 0.8 to 7 N/20 mm, more preferably 1 to 5 N/20 mm, still more preferably 1.2 to 3 N/20 mm, particularly preferably 1.5 to 2.5 N/20 mm. As described above, the initial adhesion of the pressure-sensitive adhesive layer (C) of the pressure-sensitive adhesive sheet of the present invention with respect to the acrylic plate has a moderate magnitude. Accordingly, sufficient attachment of the sheet and easy release thereof can each be easily performed, and hence the sheet can find use in a wide variety of applications. Details about a method of measuring the initial adhesion are described later.

### <<A-1. Back surface layer (A)>>

The back surface layer (A) preferably contains a thermoplastic resin that can be formed into a sheet shape or a film shape. The back surface layer (A) is preferably a polyolef in-based resin because the resin has flexibility as well as heat resistance and solvent resistance. When the back surface layer (A) has flexibility, the layer can be easily wound in a roll shape and when its adhesion to backing is improved, a tape can be easily picked up. Thus, various kinds of processing can be easily performed.

Examples of the polyolefin-based resin include a polyethylene-based resin, a propylene-based resin formed of propylene or a propylene component and an ethylene component, and a copolymer of ethylene and a polar monomer.

Examples of the polyolefin-based resin include, more specifically, a low-density polyethylene, a linear low-density polyethylene, a polypropylene, a poly-1-butene, a poly-4-methyl-1-pentene, an ethylene-propylene copolymer, an ethylene-1-butene copolymer, an ethylene-1-hexene copolymer, an ethylene-4-methyl-1-pentene copolymer, an ethylene-1-octene copolymer, an ethylene-methyl acrylate copolymer, an ethylene-methyl methacrylate copolymer, an ethylene-vinyl acetate copolymer, an ethylene-ethyl acrylate copolymer, and an ethylene-vinyl alcohol copolymer. Of those, as the back surface layer (A), resins containing an ethylene component such as a low-density polyethylene, a linear low-density polyethylene, an ethylene-propylene copolymer, an ethylene-1-butene copolymer, an ethylene-1-hexene copolymer, an ethylene-4-methyl-1-pentene copolymer, an ethylene-1-octene copolymer, an ethylene-methyl acrylate copolymer, an ethylene-methyl methacrylate copolymer, an ethylene-vinyl acetate copolymer, an ethylene-ethyl acrylate copolymer, and an ethylene-vinyl alcohol copolymer are preferred.

The back surface layer (A) may be formed of only one kind of resin component, or may be formed of two or more kinds of resin components.

The back surface layer (A) may be only one layer, or may be a laminate of two or more layers. When the back surface layer (A) is a laminate of two or more layers, the respective layers are preferably attached to each other by melt co-extrusion.

The back surface layer (A) preferably contains a block polymer formed of a block of a polyolefin and a block of a hydrophilic polymer, the block polymer serving as a polymer-type antistatic agent. The incorporation of such block polymer can impart so good surface adhesion to backing that a tape can be easily picked up, and excellent antistatic property to the back surface layer (A).

The block of the polyolefin of such block polymer preferably serves a function for uniformly dispersing the block polymer in a resin for forming the back surface layer (A) and a function for improving adhesion to backing of the back surface layer (A) so that a tape can be easily picked up. In addition, the block of the hydrophilic polymer of such block polymer preferably serves a function of preventing the charging of the back surface layer (A) . When such block polymer is incorporated, the block polymer can be uniformly dispersed in the back surface layer (A), and hence the back surface layer (A) capable of expressing stable antistatic property and having high transparency can be formed. In the case where such block polymer is used, even when a treatment such as water washing or wiping with a damp cloth is performed, nearly no reduction in antistatic property of the back surface layer (A) occurs and hence the layer can express stable antistatic property. In addition, the use of such block polymer can improve the transparency of the back surface layer (A), and hence the pressure-sensitive adhesive sheet of the present invention is useful as a surface protective film for an optical member.

The block of the polyolefin constituting the block polymer is preferably a polymer or copolymer of an α-olefin. Examples of the α-olefin include ethylene, propylene, 1-butene, 1-pentene, 1-hexene, 1-heptene, 1-octene, 3-methylbut-1-ene, 4-methylpent-1-ene, and 3-methylhex-1-ene.

It is preferred that the block of the polyolefin be chemically bonded to the block of the hydrophilic polymer. Examples of such bond include an ester bond, an amide bond, an ether bond, a urethane bond, and an imide bond. When the blocks of the polyolefin and the blocks of the hydrophilic polymer are repeatedly and alternately bonded through such bonds, the block polymer can be formed. A molecular terminal of the block of the polyolefin is preferably modified with a functional group capable of reacting with a molecular terminal functional group of the block of the hydrophilic polymer. Examples of such functional group include a carboxylic acid group, a hydroxyl group, an amino group, an ac id anhydride group, an oxazoline group, and an epoxy group. Such functional group is preferably a carboxylic acid group.

The block of the polyolefin may be a block of a both end-modified polyolefin alone, a block of a one end-modified polyolefin alone, or a mixture thereof.

The number-average molecular weight of the block of the polyolefin is preferably 800 to 50,000, more preferably 1,000 to 30,000, still more preferably 2,000 to 20,000, particularly preferably 2,500 to 10,000.

Examples of the hydrophilic polymer of the block of the hydrophilic polymer include a polyether, a polyether-containing hydrophilic polymer, a cationic polymer, and an anionic polymer.

Examples of the polyether include a polyetherdiol, a polyetherdiamine, and a modified product thereof.

The number-average molecular weight of the polyether is preferably 150 to 20, 000, more preferably 300 to 20, 000, still more preferably 1,000 to 15,000, particularly preferably 1,200 to 8, 000.

Examples of the polyether-containing hydrophilic polymer include a polyetheresteramide having a polyetherdiol segment, a polyetheramideimide having a polyetherdiol segment, a polyetherester having a polyetherdiol segment, a polyetheramide having a polyetherdiamine segment, and a polyetherurethane having a polyetherdiol or polyetherdiamine segment.

The number-average molecular weight of the polyether-containing hydrophilic polymer is preferably 800 to 50,000, more preferably 1,000 to 30,000.

The cationic polymer is, for example, a polymer having preferably 2 to 80, more preferably 3 to 60 cationic groups separated by a non-ionic molecular chain in a molecule thereof.

The number-average molecular weight of the cationic polymer is preferably 500 to 20, 000, more preferably 1,000 to 15,000, still preferably 1,200 to 8,000.

The anionic polymer is, for example, an anionic polymer using a dicarboxylic acid having a sulfonyl group and a diol or a polyether as essential constituent units, and having preferably 2 to 80, more preferably 3 to 60 sulfonyl groups in a molecule thereof.

The number-average molecular weight of the anionic polymer is preferably 500 to 20,000, more preferably 1,000 to 15,000, still more preferably 1,200 to 8,000.

The block polymer which may be incorporated into the back surface layer (A) may preferably be produced by polymerizing a block of a polyolefin and a block of a hydrophilic polymer by any appropriate method. For example, the block polymer can be produced by subj ecting a block of a polyolefin and a block of a hydrophilic polymer to a polymerization reaction at 200 to 250 °C under reduced pressure.

The number-average molecular weight of the block polymer which maybe incorporated into the back surface layer (A) is, for effectively imparting antistatic property to the back surface layer (A), preferably 2,000 to 60,000, more preferably 5,000 to 40,000, still more preferably 8,000 to 30,000.

The block polymer which may be incorporated into the back surface layer (A) can be produced, for example, by the method described in Japanese Patent Application Laid-open No.2001-278985 or Japanese Patent Application Laid-open No. 2003-48990.

The block polymer which may be incorporated into the back surface layer (A) is available, for example, as "PELESTAT" series manufactured by Sanyo Chemical Industries, Ltd. Examples thereof include "PELESTAT" series 300, 303, and 230 manufactured by Sanyo Chemical Industries, Ltd.

The content of the block polymer formed of the block of the polyolefin and the block of the hydrophilic polymer in the back surface layer (A) is preferably 2 to 50 wt%, more preferably 3 to 40 wt%, still more preferably 5 to 35 wt%, particularly preferably 10 to 30 wt%. When the content of the block polymer formed of the block of the polyolefin and the block of the hydrophilic polymer in the back surface layer (A) is less than 2 wt%, there is a possibility that adhesion to backing or antistatic property cannot be effectively imparted to the back surface layer (A). When the content of the block polymer formed of the block of the polyolefin and the block of the hydrophilic polymer in the back surface layer (A) exceeds 50 wt%, the external appearance of the back surface layer (A) may deteriorate.

An alkali metal salt or an alkaline earth metal salt can be incorporated into the back surface layer (A) from the viewpoint of an additional improvement in its antistatic property.

The total content of the alkali metal salt and the alkaline earth metal salt is preferably 0.001 to 10 wt%, more preferably 0.01 to 5 wt% with respect to the block polymer formed of the block of the polyolefin and the block of the hydrophilic polymer.

A releasing agent may be incorporated into the back surface layer (A) for improving its adhesion to backing.

Examples of the releasing agent include a fatty acid amide-based releasing agent, a silicone-based releasing agent, a fluorine-based releasing agent, and a long-chain alkyl-based releasing agent. Of those, the fatty acid amide-based releasing agent is preferred from such a viewpoint that a release layer additionally excellent in balance between adhesion to backing and resistance to contamination due to bleedout can be formed, and the long-chain alkyl-based releasing agent is more preferred. The content of the releasing agent in the back surface layer (A) is preferably 0.1 to 20 wt%, more preferably 0.5 to 15 wt%, still more preferably 1 to 10 wt%.

The back surface layer (A) has a thickness of preferably 1 to 100 µm, more preferably 1 to 80 µm, still more preferably 2 to 70 µm, particularly preferably 2 to 50 µm, most preferably 2 to 30 µm.

Any appropriate other additive may be incorporated into the back surface layer (A). Examples of such additive include a filler, a pigment, a UV absorbing agent, anantioxidant, a thermal stabilizer, a lubricant, and an antiblocking agent.

### <<A-2. Backing layer (B)>>

The backing layer (B) preferably contains a thermoplastic resin that can be formed into a sheet shape or a film shape. The backing layer (B) is preferably a polyolefin-based resin because the resin has flexibility as well as heat resistance and solvent resistance. When the backing layer (B) has flexibility, the layer can be easily wound in a roll shape and hence various kinds of processing can be easily performed.

Examples of the polyolefin-based resin include a polyethylene-based resin, a propylene-based resin formed of propylene or a propylene component and an ethylene component, and a copolymer of ethylene and a polar monomer.

Examples of the polyolefin-based resin include, more specifically, a low-density polyethylene, a linear low-density polyethylene, a polypropylene, a poly-1-butene, poly-4-methyl-1-pentene, an ethylene-propylene copolymer, an ethylene-1-butene copolymer, an ethylene-1-hexene copolymer, an ethylene-4-methyl-1-pentene copolymer, an ethylene-1-octene copolymer, an ethylene-methyl acrylate copolymer, an ethylene-methyl methacrylate copolymer, an ethylene-vinyl acetate copolymer, an ethylene-ethyl acrylate copolymer, and an ethylene-vinyl alcohol copolymer.

The backing layer (B) may be only one layer, or may be a laminate of two or more layers. When the backing layer (B) is a laminate of two or more layers, the respective layers are preferably attached to each other by melt co-extrusion.

Any appropriate additive can be incorporated into the backing layer (B). Examples of such additive include a filler, a pigment, a UV absorbing agent, an antioxidant, a thermal stabilizer, a lubricant, and an antiblocking agent.

The backing layer (B) has a thickness of preferably 5 to 300 µm, more preferably 10 to 250 µm, still more preferably 15 to 200 µm, particularly preferably 20 to 150 µm. When the thickness of the backing layer (B) is less than 5 µm, the backing layer (B) may rip or tear at the time of its release. When the thickness of the backing layer (B) exceeds 300 µm, the stiffness of the backing layer (B) becomes so large that its floating or the like may be apt to occur after its attachment.

### <<A-3. Pressure-sensitive adhesive layer (C)>>

Any appropriate layer can be adopted as the pressure-sensitive adhesive layer (C) as long as the layer is formed of a material for constituting a pressure-sensitive adhesive. In order that an effect of the present invention may be sufficiently expressed, such pressure-sensitive adhesive layer (C) preferably contains at least one kind selected from a polyolefin-based resin and a styrene-based resin. The content of the at least one kind selected from a polyolefin-based resin and a styrene-based resin in the pressure-sensitive adhesive layer (C) is preferably 50 wt% or more, more preferably 60 wt% or more, still more preferably 70 wt% or more, particularly preferably 80 wt% or more, most preferably 90 wt% or more.

Any appropriate polyolefin-based resin can be adopted as such polyolefin-based resin. Such polyolefin-based resin is, for example, an amorphous polyolefin-based elastomer.

Examples of the amorphous polyolefin-based elastomer include an ethylene-propylene rubber, an elastomer formed of ethylene and an α-olefin, and a polypropylene-based resin that expresses pressure-sensitive adhesiveness. Preferred examples thereof include polypropylene-based resins such as an atactic polypropylene. Any appropriate polypropylene-based resin can be adopted as long as the polypropylene-based resin has rubber elasticity in its usage temperature region.

Here, the amorphous polyolefin-based elastomer has such amorphous property that the elastomer has no crystal structure. A method of confirming that the elastomer has the amorphous property is, for example, a test for solubility in n-heptane. Specifically, the amorphous polyolefin-based elastomer is dissolved at a concentration of 10 wt% in n-heptane and then its solubility is measured. At that time, the elastomer having a solubility of 90% or more is regarded as having the amorphous property when the case where the elastomer is dissolved in a substantially complete fashion is defined as a solubility of 100%.

Examples of the polypropylene-based resin include a propylene-α-olefin copolymer and a propylene-ethylene-α-olefin copolymer.

Examples of the α-olefin include 1-butene, 1-pentene, 1-hexene, 1-heptene, 1-octene, 4-methyl-1-pentene, and 4-methyl-1-hexene. Of those, 1-butene, 1-hexene, 1-octene, and 4-methyl-1-pentene are preferred. The number of kinds of α-olefins may be only one, or may be two or more.

The polypropylene-based resin is preferably, for example, an amorphous propylene-(1-butene) copolymer. The amorphous propylene-(1-butene) copolymer can be preferably obtained by copolymerizing propylene and 1-butene with a metallocene catalyst. The amorphous propylene-(1-butene) copolymer obtained by the copolymerization with the metallocene catalyst shows a narrow molecular weight distribution (of, for example, 2 or less). The use of the amorphous propylene-(1-butene) copolymer showing such narrow molecular weight distribution can prevent the bleeding of a low-molecular weight component.

The content of a constituent unit derived from propylene in the amorphous propylene-(1-butene) copolymer is preferably 80 to 99 mol%, more preferably 85 to 99 mol%, still more preferably 90 to 99 mol%. As long as the content of the constituent unit derived from propylene in the amorphous propylene- (1-butene) copolymer falls within such range, the pressure-sensitive adhesive layer (C) excellent in balance between toughness and softness can be obtained, and hence the effect of the present invention can be expressed in an additionally effective fashion.

The content of a constituent unit derived from 1-butene in the amorphous propylene-(1-butene) copolymer is preferably 1 to 15 mol%, more preferably 1 to 10 mol%. As long as the content of the constituent unit derived from 1-butene in the amorphous propylene-(1-butene) copolymer falls within such range, the pressure-sensitive adhesive layer (C) excellent in balance between toughness and softness can be obtained, and hence the effect of the present invention can be expressed in an additionally effective fashion.

Any appropriate copolymeric structure can be adopted as the copolymeric structure of the amorphous propylene-(1-butene) copolymer. Examples of such copolymeric structure include a block copolymer and a random copolymer.

The amorphous propylene-(1-butene) copolymer has a weight-average molecular weight (Mw) of preferably 200,000 or more, more preferably 200,000 to 500,000, still more preferably 200,000 to 300,000. As long as the weight-average molecular weight (Mw) of the amorphous propylene-(1-butene) copolymer falls within such range, the pressure-sensitive adhesive layer (C) having a proper adhesion can be obtained and hence the effect of the present invention can be expressed in an additionally effective fashion.

When the pressure-sensitive adhesive layer (C) contains the amorphous propylene-(1-butene) copolymer, the pressure-sensitive adhesive layer (C) may further contain a crystalline polypropylene-based resin in order that the adhesion of the pressure-sensitive adhesive layer (C) may be adjusted. When the pressure-sensitive adhesive layer (C) contains the crystalline polypropylene-based resin, the adhesion of the pressure-sensitive adhesive layer (C) is moderately reduced and hence its storage modulus of elasticity can be increased. When the pressure-sensitive adhesive layer (C) further contains the crystalline polypropylene-based resin, the content of the crystalline polypropylene-based resin in the pressure-sensitive adhesive layer (C) can be set to any appropriate content depending on a desired adhesion and a desired storage modulus of elasticity. The content of such crystalline polypropylene-based resin is preferably 0 to 50 wt%, more preferably 0 to 40 wt%, still more preferably 0 to 30 wt% with respect to the total weight of the amorphous propylene-(1-butene) copolymer and the crystalline polypropylene-based resin.

As the styrene-based resin, a styrene-based thermoplastic elastomer is preferred. As the styrene-based thermoplastic elastomer, any appropriate styrene-based thermoplastic elastomer maybe adopted as long as it can be formed into a film by melt extrusion. The term "styrene-based thermoplastic elastomer" refers to an elastomer obtained using a monomeric component which at least contains at least one kind of styrene-based monomers. The number of kinds of styrene-based thermoplastic elastomers may be only one, or may be two or more.

Specific examples of the styrene-based thermoplastic elastomer include styrene-based block copolymers including: styrene-based AB-type diblock copolymers such as a styrene-ethylene-butylene copolymer (SEB); styrene-based ABA-type triblock copolymers such as a styrene-butadiene-styrene copolymer (SBS), a hydrogenated product of SBS (styrene-ethylene-butylene-styrene copolymer (SEBS)), a styrene-isoprene-styrene copolymer (SIS), a hydrogenated product of SIS (styrene-ethylene-propylene-styrene copolymer (SEPS)), and a styrene-isobutylene-styrene copolymer (SIBS); styrene-based ABAB-type tetrablock copolymers such as styrene-butadiene-styrene-butadiene (SBSB); styrene-based ABABA-type pentablock copolymers such as styrene-butadiene-styrene-butadiene-styrene (SBSBS); and styrene-based multi-block copolymers having six or more of A-B repeat units. In addition, hydrogenated products each obtained by hydrogenating ethylenic double bonds of a styrene-based random copolymer such as a styrene-butadiene rubber (SBR) may also be used.

The content of a styrene block structure in the styrene-based block copolymer is preferably 5 to 40 wt%, more preferably 7 to 30 wt%, still more preferably 9 to 20 wt%. When the content of the styrene block structure is smaller than 5 wt%, an adhesive residue due to an insufficient cohesive strength of the pressure-sensitive adhesive layer (C) is apt to occur. When the content of the styrene block structure is larger than 40 wt%, the pressure-sensitive adhesive layer (C) becomes hard, and hence good adhesion for a rough surface may not be obtained.

When the styrene-based block copolymer has an ethylene-butylene block structure, the content of a structural unit derived from butylene in the ethylene-butylene block structure is preferably 50 wt% or more, more preferably 60 wt% or more, still more preferably 70 wt% or more, particularly preferably 70 to 90 wt%. As long as the content of the structural unit derived from butylene falls within such range, a pressure-sensitive adhesive layer (C) excellent in wettability and adhesion, and capable of being favorably bonded even to a rough surface can be obtained.

The pressure-sensitive adhesive layer (C) can contain any appropriate other component as required. Examples of the other component include: a tackifier; a softening agent; an antioxidant; an olefin-based resin; a silicone-based resin; a liquid acrylic copolymer; a polyethyleneimine; a fatty acid amide; a phosphate; a hindered amine-based light stabilizer; a UV absorbing agent; a thermal stabilizer; a filler or pigment such as calcium oxide, magnesium oxide, silica, zinc oxide, or titanium oxide; and any other additive. The kinds, number, and amounts of other additives that can be incorporated into the pressure-sensitive adhesive layer (C) can be properly set depending on purposes. The content of the other component is preferably 5 wt% or less, more preferably 1 wt% or less with respect to the entirety of the pressure-sensitive adhesive layer (C).

The tackifier is effective in improving the adhesion. When the pressure-sensitive adhesive layer (C) contains the tackifier, the content of the tackifier in the pressure-sensitive adhesive layer (C) can be set to any appropriate content in consideration of the prevention of the occurrence of an adhesive residue due to a reduction in cohesive strength of the layer. The content of the tackifier in the pressure-sensitive adhesive layer (C) is preferably 1 to 60 wt%, more preferably 3 to 50 wt%, still more preferably 4 to 45 wt%, particularly preferably 5 to 40 wt% with respect to the resin component of the pressure-sensitive adhesive layer (C).

Examples of the tackifier include a hydrocarbon-based tackifier, a terpene-based tackifier, a rosin-based tackifier, a phenol-based tackifier, anepoxy-basedtackifier, apolyamide-based tackifier, an erastomer-based tackifier, and a ketone-based tackifier. The number of kinds of tackifiers in the pressure-sensitive adhesive layer (C) may be only one, or may be two or more.

Examples of the hydrocarbon-based tackifier include an aliphatic hydrocarbon resin, an aromatic hydrocarbon resin (for example, a xylene resin), an aliphatic cyclic hydrocarbon resin, an aliphatic/aromatic petroleum resin (for example, a stylene-olefin-based copolymer), an aliphatic/alicyclic petroleum resin, a hydrogenated hydrocarbon resin, a coumarone-based resin, and a coumarone-indene-based resin.

Examples of the terpene-based tackifier include a terpene-based resin such as an α-pinene polymer or a β-pinene polymer; and a modified terpene-based resin (for example, a terpene-phenol-based resin, astylene- modified terpene-based resin, or a hydrogenated terpene-based resin) obtained by subjecting a terpene-based resin to modification (for example, phenol modification, aromatic modification, or hydrogenation modification).

Examples of the rosin-based tackifier include a non-modified rosin (raw rosin) such as a gum rosin or a wood rosin; a modified rosin (for example, a hydrogenated resin, a disproportionated resin, a polymerized resin, or any other chemically-modified resin) obtained by modifying a non-modified resin through hydrogenation, disproportionation, polymerization, or the like; and other various rosin derivatives.

The phenol-based tackifier is, for example, a resol-type or novolac-type alkyl phenol.

The tackifier may be a commercially available tackifier as a blended product with an olefin resin or a thermoplastic elastomer.

The softening agent is effective in improving the adhesion. When the pressure-sensitive adhesive layer (C) contains the softening agent, any appropriate content can be adopted as the content of the softening agent in the pressure-sensitive adhesive layer (C). When the content of the softening agent in the pressure-sensitive adhesive layer (C) becomes excessively large, the amount of an adhesive residue at the time of high-temperature or outdoor exposure of the layer tends to increase. Accordingly, the content of the softening agent in the pressure-sensitive adhesive layer (C) is preferably 40 wt% or less, more preferably 20 wt% or less, still more preferably 10 wt% or less.

Examples of the softening agent include a low-molecular-weight diene-based polymer, a polyisobutylene, a hydrogenated polyisoprene, a hydrogenated polybutadiene, and derivatives of them. Examples of the derivatives include those each having an OH group or COOH group on one of, or each of both of, its terminals. Specific examples of such derivatives include a hydrogenated polybutadiene diol, a hydrogenated polybutadiene monool, a hydrogenated polyisoprene diol, and a hydrogenated polyisoprene monool. A hydrogenated product of a diene-based polymer such as a hydrogenated polybutadiene or a hydrogenated polyisoprene, an olef in-based softening agent, or the like is preferred for additionally suppressing the improvement of the adhesion. Such softening agent is specifically, for example, a "Kuraprene LIR-200" manufactured by KURARAY CO., LTD. The number of kinds of softening agents in the pressure-sensitive adhesive layer (C) may be only one, or may be two or more.

The molecular weight of the softening agent can be set to any appropriate value. When the molecular weight of the softening agent is excessively small, the small molecular weight may cause contamination due to bleeding from the pressure-sensitive adhesive layer (C). On the other hand, when the molecular weight of the softening agent is excessively large, an improving effect on the adhesive strength tends to be poor. Accordingly, the number-average molecular weight of the softening agent is preferably 5000 to 100, 000, more preferably 10,000 to 50,000.

The thickness of the pressure-sensitive adhesive layer (C) is preferably 1 to 50 µm, more preferably 2 to 40 µm, still more preferably 3 to 20 µm.

The surfaces of the pressure-sensitive adhesive layer (C) may be subjected to a surface treatment intended for control of pressure-sensitive adhesiveness, improvement of attachment workability, or the like including a corona discharge treatment, a UV irradiation treatment, a flame treatment, a plasma treatment, and a sputter etching treatment as required.

A separator or the like can be temporarily attached to protect the pressure-sensitive adhesive layer (C) as required before the layer is put into practical use.

### <<<<B. Method of producing pressure-sensitive adhesive sheet>>>>

The pressure-sensitive adhesive sheet of the present invention can be obtained by subjecting the formation material composition containing the formation material (a) for the back surface layer (A), the formation material (b) for the backing layer (B), and the formation material (c) for the pressure-sensitive adhesive layer (C) to co-extrusion molding to integrate the layers.

The formation material (a) for the back surface layer (A) preferably contains a polyolefin-based resin, and a block polymer formed of a block of a polyolefin and a block of a hydrophilic polymer, and can further contain a releasing agent as required. The formation material (a) for the back surface layer (A) is preferably obtained by, for example, (1) a method involving mixing these materials through dry blending with a mixer such as a tumbling mixer, a ribbon blender, or a Henschel mixer, (2) a method involving dryblending these materials, and pelletizing the resultant through melting and mixing with an extruder, or (3) a method involving producing a master batch of these materials in advance and mixing the master batch with a polyolefin-based resin or the like through dry blending with the mixer.

The co-extrusion molding can be performed in conformity with a method such as an inflation method or a T-die method by using an extruder and a die for co-extrusion for the formation materials for the respective layers. As a result of the co-extrusion molding, the respective layers derived from the respective formation materials are integrated to provide a laminate.

Upon production of the pressure-sensitive adhesive sheet of the present invention, the laminate obtained through the integration by the co-extrusion molding may be irradiated with an ionizing radiation. Specifically, for example, the resultant laminate may be irradiated with the ionizing radiation before being wound in a roll shape, or in a state of being unwound again after being wound in a roll shape. The irradiation with the ionizing radiation is preferably performed under an atmosphere of an inert gas such as nitrogen. Examples of the ionizing radiation include an X-ray, a γ-ray, UV light, a visible ray, and an electron beam. Of those, the electron beam is preferred as the ionizing radiation because of, for example, the following reasons. The ratio at which a reaction active species is produced during the irradiation is high and the electron beam deeply penetrates an obj ect to be irradiated. Various electron beam accelerators such as Cockroft-Walton-type, van de Graaff-type, resonance transformer-type, insulating core transformer-type, linear, dynamitron-type, and high-frequency-type accelerators can each be used as an electron beam source. The ionizing radiation may be applied from one side of the laminate, or may be applied from each of both sides thereof. The irradiation with the ionizing radiation is preferably performed by introducing the laminate into an ionizing radiation irradiation apparatus before winding the laminate in a roll shape in terms of the simplification of the step. The irradiation dose of the ionizing radiation is preferably 10 to 500 kGy, more preferably 10 to 400 kGy, still more preferably 10 to 300 kGy from the viewpoints of an improvement in interlayer adhesiveness and the maintenance of the physical properties of the pressure-sensitive adhesive sheet. An accelerating voltage for the ionizing radiation can be appropriately selected depending on the kinds of resins to be used in the pressure-sensitive adhesive sheet and the thickness of the pressure-sensitive adhesive sheet. The accelerating voltage for the ionizing radiation preferably falls within the range of 50 to 300 kV in ordinary cases. The ionizing radiation may be applied once, or may be applied a plurality of times (preferably twice).

Hereinafter, the present invention is specifically described by way of examples. However, the present invention is by no means limited to these examples. It should be noted that test and evaluation methods in the examples and the like are as described below. In addition, the term "part(s)" means "part (s) by weight." In addition, the term "%" means "wt%."

### <Measurement of weight-average molecular weight>

GPC measurement was performed under the following conditions.
Measuring apparatus: A model "HLC-8120GPC" manufactured by TOSOH CORPORATION
Column: A product obtained by connecting columns TSKgel Super HZM-H/HZ4000+HZ3000+HZ2000 manufactured by TOSOH CORPORATION in series was used.

| | |
|---|---|
| Column size: | Each column had an inner diameter of 6.0 mm and a length of 15.0 cm |
| Column temperature: | 40°C |
| Flow rate: | 0.6 mL/min |
| Eluent: | Tetrahydrofuran |
| Sample injection amount: | 20 µL |
| Detector: | RI (differential refractometer) |
| Standard sample: | Polystyrene |

### <Measurement of surface resistance value>

Measurement was performed under an atmosphere having a temperature of 23°C and a humidity of 50%RH with a resistivity meter (Hiresta UP Model MCP-HT450 manufactured by Mitsubishi Chemical Analytech Co., Ltd.) in conformity with JIS-K-6911.

### <Measurement of peel strength>

A pressure-sensitive adhesive sheet was cut into a piece with a size of 70 mm in width and 100 mm in length. The piece was fixed on an acrylic plate (ACRYLITE L manufactured by MITSUBISHI RAYON CO., LTD.) with its back surface layer to be a surface, and was then used as an adherend. A single-sided pressure-sensitive adhesive tape (SPV-V-420 manufactured by NITTO DENKO CORPORATION) was cut into a piece with a size of 20 mm in width and 100 mm in length. The piece of the single-sided pressure-sensitive adhesive tape was attached to the adherend at a linear pressure of 78.5 N/cm and a rate of 0.3 m/min with the adhesive pressure-sensitive layer side of the tape on the back surface layer of the adherend, and then the resultant was left to stand under an environment having a temperature of 23°C and a humidity of 50%RH for 30 minutes. After that, the pressure-sensitive adhesive sheet was released from the adherend under the same environment with a universal tensile tester (Autograph AG-IS manufactured by Shimadzu Corporation) under the conditions of a peel rate of 10 m/min and a peel angle of 180°, and then its peel strength at this time was measured. The measurement was performed on 3 samples and the average of the measured values was defined as peel strength.

### <Measurement of initial adhesion>

A pressure-sensitive adhesive sheet wound in a roll shape was unwound by 5 layers and then the outside tape was cut out. After that, the pressure-sensitive adhesive sheet was unreeled so as to have a length of 300 mm and a width of 20 mm, and was then used as a test sample.

An acrylic plate (ACRYLITE L manufactured by MITSUBISHI RAYON CO., LTD.) was used as an adherend. The pressure-sensitive adhesive sheet was attached to the adherend at a linear pressure of 78.5 N/cm and a rate of 0.3 m/min, and then the resultant was left to stand under an atmosphere having a temperature of 23°C and a humidity of 50%RH for 30 minutes. After that, the pressure-sensitive adhesive sheet was released from the adherend under the same atmosphere with a universal tensile tester (AutographAG-IS manufactured by Shimadzu Corporation) under the conditions of a peel rate of 10 m/min and a peel angle of 180°, and then its peel strength at this time was measured. The measurement was performed on 3 samples and the average of the measured values was defined as an initial adhesion.

### (Production Example 1): Production of releasing agent

100 Parts by weight of an ethylene-vinyl alcohol copolymer (manufactured by KURARAY CO., LTD., trade name: "Eval E-171B," ethylene structural unit: 44 mol%) and 310 parts by weight of octadecyl isocyanate (manufactured by HODOGAYA CHEMICAL CO., LTD., trade name : "Millionate O") were dispersed in 2,000 parts by weight of toluene. While the mixture was refluxed for 2 hours, moisture was removed by separation from a refluxing apparatus during the reflux. After that, the remainder was cooled to 40°C and then 300 parts by weight of dimethyl sulfoxide were added to the cooled product. Octadecyl isocyanate (manufactured by HODOGAYA CHEMICAL CO., LTD., trade name : "Millionate O") was dropped to the mixture while being stirred so that an equivalent ratio of isocyanate groups to the hydroxyl groups of the ethylene-vinyl alcohol copolymer was 0.7. Then, the mixture was subj ected to a reactionat 120°C for 4 hours. During the reaction, the remaining isocyanate groups in the system were quantified with an infrared spectrophotometer (around 2260 cm⁻¹), and the time point at which the remaining groups disappeared was defined as an endpoint.

After the termination of the reaction, 340 parts by weight of water were added to the reaction liquid to separate the reaction liquid. After the reaction liquid as a toluene layer had been subj ected to azeotropic dehydration at 110°C for 1 hour, the reaction liquid was filtered under pressure at 30°C with a closed pressure filter (manufactured by TOYO ENGINEERING WORKS, LTD., sterile filter). The resultant filtrate was poured into 5,000 parts by weight of methanol to deposit a white precipitate. After having been separated by filtration, the precipitate was washed with methanol, centrifuged, and dried and pulverized. Thus, 363 parts by weight of the target releasing agent were obtained.

The total content of impurities in the resultant releasing agent was 0.4 wt% and the releasing agent had a weight-average molecular weight of 1.13×10⁵. It should be noted that methods of calculating the total content (wt%) of the impurities in the releasing agent and the weight-average molecular weight of the releasing agent are as described below.

The total content of the impurities in the releasing agent was measured by employing a GPC method. A "TSKgel" manufactured by TOSOH CORPORATION (solvent: tetrahydrofuran, temperature: 40°C, flow rate: 0.6 ml/min, concentration: 1.0 mg/ml, column: Super HZM-H/HZ4000/HZ3000/HZ2000, detector: RI (built in the apparatus)) was used as an apparatus. A ratio represented in terms of percentage of the peak areas of components below a peak valley (local minimum) present at a molecular weight in terms of polystyrene of about 3.0×10³ to the total peak area in the resultant molecular weight distribution chart was defined as the total content.

In addition, the weight-average molecular weight of the releasing agent is the weight-average molecular weight of components having higher molecular weights than a peak valley (local minimum) present at a molecular weight in terms of polystyrene of about 3.0×10³ in a molecular weight distribution chart obtained in the same manner as in the case of the total content of the impurities in the releasing agent.

### (Example 1)

The releasing agent, an ethylene-vinyl acetate copolymer-based resin (manufactured by Japan Polyethylene Corporation, NOVATEC LV440, d=0.936, MFR=2.0), a polyethylene-based resin (manufactured by Japan Polyethylene Corporation, NOVATEC LC720, d=0.922, MFR=9.4), and a PELESTAT 230 (manufactured by Sanyo Chemical Industries, Ltd., MFR=12) were extruded at a compounding ratio shown in Table 1 with a biaxial extruder (L/D=51.5, extruder temperature: 180 to 200°C, screw speed: 100 rpm). After that, the extruded product was cooled in a water bath and then pelletized. The resultant pellet was used as a formation material for a back surface layer.

A polyethylene (Petrocene 186R manufactured by TOSOH CORPORATION) was used as a formation material for a backing layer.

A polyolefin-based pressure-sensitive adhesive resin (Tafthren H5002 manufactured by Sumitomo Chemical Company, Limited) was used as a formation material for a pressure-sensitive adhesive layer.

The respective formation materials were co-extruded by a three-kind, three-layer inflation molding method (blow ratio: 2.0, take-off speed: 10 m/min) at a die temperature of 180°C. Thus, a pressure-sensitive adhesive sheet (1) having a laminated structure of a back surface layer, a backing layer, and a pressure-sensitive adhesive layer was obtained.

The back surface layer had a thickness of 3 µm, the backing layer had a thickness of 30 µm, and the pressure-sensitive adhesive layer had a thickness of 5 µm.

Table 2 shows the results.

### (Example 2)

A pressure-sensitive adhesive sheet (2) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Example 3)

A pressure-sensitive adhesive sheet (3) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 um, the backing layer had a thickness of 30 µm, and the pressure-sensitive adhesive layer had a thickness of 5 µm.

Table 2 shows the results.

### (Example 4)

A pressure-sensitive adhesive sheet (4) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Example 5)

A pressure-sensitive adhesive sheet (5) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Example 6)

A pressure-sensitive adhesive sheet (6) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Comparative Example 1)

A pressure-sensitive adhesive sheet (C1) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Comparative Example 2)

A pressure-sensitive adhesive sheet (C2) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Comparative Example 3)

A pressure-sensitive adhesive sheet (C3) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Comparative Example 4)

A pressure-sensitive adhesive sheet (C4) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Comparative Example 5)

A pressure-sensitive adhesive sheet (C5) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, and the PELESTAT 230 was changed as shown in Table 1.

The back surface layer had a thickness of 3 µm, the backing layer had a thickness of 30 µm, and the pressure-sensitive adhesive layer had a thickness of 5 µm.

Table 2 shows the results.

### (Comparative Example 6)

A pressure-sensitive adhesive sheet (C6) having a laminated structure of a back surface layer, a backing layer, and a pressure-sensitive adhesive layer was obtained in the same manner as in Example 1 except that the compounding ratio among the releasing agent, the ethylene-vinyl acetate copolymer-based resin, the polyethylene-based resin, the PELESTAT 230, and a surfactant-type antistatic agent (ELESTMASTER LL-10 manufactured by Kao Corporation) was changed as shown in Table 1.

The back surface layer had a thickness of 3 µm, the backing layer had a thickness of 30 µm, and the pressure-sensitive adhesive layer had a thickness of 5 µm.

Table 2 shows the results.

**Table 1**

| Test No. | Releasing agent | NOVATEC LV440 | NOVATEC LC720 | PELESTAT 230 | ELESTMASTER LL-10 |
|---|---|---|---|---|---|
| Example 1 | 3% | 3% | 84% | 10% | 0% |
| Example 2 | 5% | 5% | 80% | 10% | 0% |
| Example 3 | 3% | 3% | 79% | 15% | 0% |
| Example 4 | 5% | 5% | 75% | 15% | 0% |
| Example 5 | 3% | 3% | 74% | 20% | 0% |
| Example 6 | 5% | 5% | 70% | 20% | 0% |
| comparative Example 1 | 0% | 0% | 100% | 0% | 0% |
| comparative Example 2 | 1% | 1% | 93% | 5% | 0% |
| comparative Example 3 | 3% | 3% | 89% | 5% | 0% |
| comparative Example 4 | 1% | 1% | 88% | 10% | 0% |
| comparative Example 5 | 1% | 1% | 78% | 20% | 0% |
| comparative Example 6 | 0% | 0% | 80% | 0% | 20% |

**Table 2**

| Test No. | Classification of antistatic agents | Antistatic agent concentration (%) | Releasing agent concentration (%) | Surface resistance value (Ω/□) | Peel strength (N/20mm) 10m/min | Initial adhesion with respect to acrylic plate 10m/min |
|---|---|---|---|---|---|---|
| Example 1 | Polymer-type antistatic agent | 10% | 3% | 5.0E+12 | 2.83 | 1.8 |
| Example 2 | Polymer-type antistatic agent | 10% | 5% | 4.8E+12 | 1.80 | 1.7 |
| Example 3 | Polymer-type antistatic agent | 15% | 3% | 1.8E+11 | 2.90 | 1.8 |
| Example 4 | Polymer-type antistatic agent | 15% | 5% | 1.8E+11 | 2.00 | 1.9 |
| Example 5 | Polymer-type antistatic agent | 20% | 3% | 5.0E+10 | 3.25 | 2.0 |
| Example 6 | Polymer-type antistatic agent | 20% | 5% | 5.4E+10 | 2.30 | 1.9 |
| Comparative Example 1 | - | 0% | 0% | >1E+14 | 3.55 | 1.8 |
| Comparative Example 2 | Polymer-type antistatic agent | 5% | 1% | >1E+14 | 3.50 | 1.9 |
| Comparative Example 3 | Polymer-type antistatic agent | 5% | 3% | >1E+14 | 2.75 | 1.8 |
| Comparative Example 4 | Polymer-type antistatic agent | 10% | 1% | 3.2E+12 | 3.50 | 1.8 |
| Comparative Example 5 | Polymer-type antistatic agent | 20% | 1% | 5.8E+10 | 3.90 | 1.7 |
| Comparative Example 6 | Surfactant-type antistatic agent | 20% | 0% | 1.6E+12 | 0.75 | 0.7 |

The pressure-sensitive adhesive sheet obtained in the present invention is useful as a surface protective film. In addition, the sheet is preferably used in a surface protective film for an optical member where visibility is needed.

## Claims

1. A pressure-sensitive adhesive sheet, comprising:
a back surface layer (A);
a backing layer (B); and
a pressure-sensitive adhesive layer (C),
the back surface layer (A) and the pressure-sensitive adhesive layer (C) being outermost layers,
wherein:
the back surface layer (A) has a peel strength of 0.1 to 3.5 N/20 mm; and
the back surface layer (A) has a surface resistance value of less than 1×10¹⁴ Ω/□.

2. A pressure-sensitive adhesive sheet according to claim 1, wherein the pressure-sensitive adhesive layer (C) has an initial adhesion with respect to an acrylic plate at a measurement temperature of 23°C, a peel rate of 10 m/min, and a peel angle of 180° of 0.8 to 7 N/20 mm.

3. A pressure-sensitive adhesive sheet according to claim 1 or 2, wherein the pressure-sensitive adhesive layer (C) contains at least one kind selected from a polyolefin-based resin and a styrene-based resin.

4. A pressure-sensitive adhesive sheet according to any one of claims 1 to 3, wherein the back surface layer (A) contains a block polymer formed of a block of a polyolefin and a block of a hydrophilic polymer.

5. A pressure-sensitive adhesive sheet according to claim 4, wherein a content of the block polymer in the back surface layer (A) is 2 to 50 wt%.

6. A pressure-sensitive adhesive sheet according to any one of claims 1 to 5, wherein the back surface layer (A) contains a releasing agent.

7. A pressure-sensitive adhesive sheet according to claim 6, wherein a content of the releasing agent in the back surface layer (A) is 0.1 to 20 wt%.

8. A pressure-sensitive adhesive sheet according to any one of claims 1 to 7, wherein the pressure-sensitive adhesive sheet is obtained by subjecting a formation material composition containing a formation material (a) for the back surface layer (A), a formation material (b) for the backing layer (B), and a formation material (c) for the pressure-sensitive adhesive layer (C) to co-extrusion molding to integrate the layers.

9. A pressure-sensitive adhesive sheet according to any one of claims 1 to 8, wherein the pressure-sensitive adhesive sheet comprises a surface protective film.

10. A pressure-sensitive adhesive sheet according to claim 9, wherein the pressure-sensitive adhesive sheet comprises a surface protective film for an optical member.
